# EUROPÄISCHE PATENTSCHRIFT

(11) **EP 3 820 679 B1**
(45) Veröffentlichungstag und Bekanntmachung des Hinweises auf die Patenterteilung: **12.07.2023**
(21) Anmeldenummer: 19749704.3
(22) Anmeldetag: 01.08.2019
(51) Int. Cl.: B29C 65/02, B29C 65/06, B29C 65/08, B29C 65/14, B29C 65/16

(54) **SCHWEISSVORRICHTUNG UND GESTELL DAFÜR**
WELDING DEVICE AND RACK FOR SAME
DISPOSITIF DE SOUDAGE ET SUPPORT POUR CELUI-CI

(30) Priorität: 13.08.2018 DE 102018119618
(43) Veröffentlichungstag der Anmeldung: 19.05.2021
(73) Patentinhaber: Branson Ultraschall Niederlassung der Emerson Technologies GmbH & Co. OHG, 63128 Dietzenbach (DE)
(72) Erfinder: PRIEM, Heiko, 63636 Brachttal (DE)
(74) Vertreter: HWP Intellectual Property
(86) Internationale Anmeldenummer: PCT/EP2019/070796
(87) Internationale Veröffentlichungsnummer: WO 2020/035326

(56) Entgegenhaltungen:
- DE-A1- 2 635 348

## Beschreibung

### 1. Gebiet der Erfindung

Die vorliegende Erfindung betrifft eine Schweißvorrichtung, insbesondere eine Laserschweißvorrichtung, eine Infrarotschweißvorrichtung, eine Vibrationsschweißvorrichtung oder eine Ultraschallschweißvorrichtung, sowie ein Gestell zur Realisierung der genannten Schweißvorrichtung. Zudem betrifft vorliegende Erfindung ein Schweißverfahren, welches mit Hilfe der in oben genanntem Gestell angeordneten Schweißvorrichtung realisierbar ist.

### 2. Hintergrund der Erfindung

Im Stand der Technik sind verschiedene Konstruktionen eines Gestells für eine Schweißvorrichtung bekannt. Obwohl die oben genannten Schweißverfahren, wie das Laserschweißen, das Infrarotschweißen, das Vibrationsschweißen und das Ultraschallschweißen, im Hinblick auf die verbindende Energiezufuhr unterschiedlich ausgestaltet sind, zeichnen sich alle Verfahren dadurch aus, dass miteinander zu verbindende Bauteile gegeneinander gedrückt werden müssen. Entsprechend ist es erforderlich, dass in vertikaler Richtung auf das obere Bauteil in einer stapelförmigen Anordnung von mindestens zwei Bauteilen oder aber auch auf das untere Bauteil eine Kraft aufgebracht wird. Diese Kraft sorgt für den notwendigen Kontakt zwischen den miteinander zu verbindenden Bauteilen, sodass diese miteinander verbunden werden können.

Die US-Patente US 4,584,037, US 5,772,103 und US 5,833,127 umfassen eine Vertikalsäule, an der über einen Kragarm eine Schweißvorrichtung vertikal versetzbar angeordnet ist. In den hier genannten Reibschweißvorrichtungen werden die Bauteile drehend gegeneinander gedrückt, um über die entstehende Reibung während des Drehens die nötige Wärme zum Verschweißen der beiden aneinander anliegenden Bauteile zu erzeugen. Dabei sorgt ein nötiger Druck oder eine durch das Gestell auf die beiden miteinander zu verbindenden Bauteile aufgebrachte Kraft dafür, dass sich eine verlässliche Schweißverbindung ausbildet.

Der oben angesprochene Druck/Kraft wirkt in gleicher Weise wie die Orientierung des Vertikalständers ebenfalls in vertikaler Richtung. Das hat zur Folge, dass bei ausreichender mechanischer Vertikalbelastung ein Aufbiegen bzw. Ausweichen des Vertikalständers aus seiner vertikalen Orientierung hervorgerufen wird. Dies ist im Speziellen dann der Fall, wenn die mechanische Belastung der Bauteile Lateralkräfte hervorruft, die gegen die Steifigkeit des Vertikalständers diesen in lateraler Richtung verformen. Entsprechend erfährt der Vertikalständer ein Biegemoment, sodass die miteinander zu verbindenden Bauteile aus ihrer parallelen Anordnung verkippt werden. Als eine Folge wird die zwischen den beiden Bauteilen erzeugte Schweißverbindung ungleichmäßig ausgebildet.

Das deutsche Gebrauchsmuster DE 83 16 643 beschreibt ein Gestell für Werkzeugmaschinen oder andere Bearbeitungsvorrichtungen. Das Gestell dieser Vorrichtung zeichnet sich dadurch aus, dass ein Spindelkasten zur Bewegung in z-Richtung, also in vertikaler Richtung, zum Bearbeiten eines Bauteils vorgesehen ist. Dieser Spindelkasten ist an zwei parallel zueinander angeordneten vertikalen Führungsschienen gehalten. Um diese vertikalen Führungsschienen mechanisch von der Gewichtskraft des Spindelkastens zu entlasten, ist zusätzlich zwischen diesen Führungen ein C-Träger mit Antriebseinheit angeordnet. Da der Spindelkasten nicht allein an den vertikalen Führungen, sondern ebenfalls an dem zwischengeordneten C-Träger aufgehangen ist, verteilen sich die mechanischen Gewichtskräfte des Spindelkastens auf die vertikalen Führungen und den C-Träger. Entsprechend werden die vertikalen Führungen von den quer dazu wirkenden Zugbelastungen des Spindelkastens entlastet, da ein Teil seiner Gewichtskraft über die zentrale Aufhängevorrichtung des C-Trägers aufgenommen wird.

Ein weiteres Gestell für eine Ultraschallschweißvorrichtung offenbart EP 2 905 108 B1. Dieses Gestell nutzt einen zentralen C-Träger, an dem zwei in vertikaler Richtung verfahrbare Kragarme in Form von Schlitten angeordnet sind. An dem oberen Kragarm bzw. Schlitten ist ein Linearantrieb vorgesehen, der eine Verstelleinheit für den darunter angeordneten Schlitten darstellt. Um den zentralen C-Träger mit Antrieb zu entlasten, sind seitlich davon C-förmige Bügel angeordnet. Diese C-förmige Bügel nehmen eine mögliche Aufbiegung des C-Trägers mit Antrieb auf. Auf diese Weise soll für eine parallele Anordnung von Sonotrode und Amboss gesorgt werden.

Häufig ist die mechanische Entlastung durch Nutzung der C-förmigen Bügel nicht ausreichend. Daher ist es zusätzlich erforderlich, die Antriebseinheit und das Schwinggebilde im vorliegenden Gestell fluchtend anzuordnen. Diese fluchtende Anordnung von Schwinggebilde und Antriebseinheit verhindert ein mögliches Biegemoment an dem Schlitten, der das Schwinggebilde trägt. Neben der aufwändigen Konstruktion sorgt gerade die zwingend erforderliche fluchtende Anordnung von Antriebseinheit und Schwinggebilde für die Bereitstellung eines großen Bauraums. Denn die Antriebseinheit ist oberhalb des Schwinggebildes angeordnet und ragt daher über das Schwinggebilde und das Gestell der Schweißvorrichtung hinaus.

Ein Verfahren zum Heißverschweißen mit einer Heizplatten aufweisenden Maschine und eine Vorrichtung zum Auswechseln und Ausrichten der Heizplatten sind in DE 26 35 348 A1 beschrieben. Die Maschine umfasst eine beheizte Platte auf einem beweglichen Schlitten, um in eine Position zwischen den zu verbindenden Teilen vorzurücken. Ersatzplatten sind in einer festen Gleitschiene im rechten Winkel zur Bewegungsrichtung des Schlittens montiert. In der eingefahrenen Position des Schlittens richtet sich ein Teil der Gleitschiene auf dem Schlitten nach der festen Schiene aus, so dass die frische Platte leicht in Position gebracht werden kann. Die Maschine wird verwendet, um Abdeckungen mit elektrischen Batteriegehäusen zu verbinden. Die Platten können schnell getauscht werden, ohne auf das Abkühlen der benutzten Platte zu warten.

Im Hinblick auf die Nachteile des Standes der Technik ist es die Aufgabe vorliegender Erfindung, eine alternative Konstruktion eines Gestells einer Schweißvorrichtung bereitzustellen, die sich durch ausreichende mechanische Stabilität aber auch durch eine Effektivität in ihrem Bauraum auszeichnet.

### 3. Zusammenfassung der Erfindung

Die obige Aufgabe wird durch ein Gestell für eine Schweißvorrichtung, insbesondere eine Laserschweißvorrichtung oder eine Infrarotschweißvorrichtung oder eine Vibrationsschweißvorrichtung oder eine Ultraschallschweißvorrichtung, gemäß dem unabhängigen Patentanspruch 1 gelöst. Zudem löst obige Aufgabe eine Schweißvorrichtung in Kombination mit obigem Gestell gemäß dem unabhängigen Patentanspruch 9 sowie die Verwendung des Gestells zum Laserschweißen, Infrarotschweißen, Vibrationsschweißen oder Ultraschallschweißen gemäß dem unabhängigen Patentanspruch 10. Außerdem wird obige Aufgabe durch das Schweißverfahren gemäß dem unabhängigen Patentanspruch 11 gelöst. Vorteilhafte Ausgestaltungen, Weiterentwicklungen und bevorzugte Ausführungsformen vorliegender Erfindung gehen aus der folgenden Beschreibung, den begleitenden Zeichnungen und den anhängenden Patentansprüchen hervor.

Das erfindungsgemäße Gestell für eine Schweißvorrichtung, insbesondere eine Laserschweißvorrichtung oder eine Infrarotschweißvorrichtung oder eine Vibrationsschweißvorrichtung oder eine Ultraschallschweißvorrichtung, weist die folgenden Merkmale auf einen Doppelrahmen, der mindestens zwei auf einer Grundplatte befestigte sowie parallel zueinander und nebeneinander angeordnete Vertikalsäulen und jeweils einen an den Vertikalsäulen befestigten Kragarm aufweist, mindestens einen parallel zu den Vertikalsäulen versetzbaren Tisch, der parallel an den beiden Vertikalsäulen geführt ist, eine C-förmige Antriebseinheit, die einen ersten und einen zweiten Flansch umfasst, die relativ zueinander linear bewegbar an einem verbindenden Vertikalschenkel geführt sind, in der mit der Antriebseinheit ein Abstand zwischen dem ersten und dem zweiten Flansch in Richtung des Vertikalschenkels veränderbar ist, wobei die C-förmige Antriebseinheit zwischen den Vertikalsäulen des Doppelrahmens angeordnet ist und über eine Verbindung zwischen dem ersten Flansch und dem Tisch des Doppelrahmens der Tisch relativ gegen ein starres Gegenlager oder gegen einen weiteren bewegbaren Tisch des Doppelrahmens bewegbar ist, wobei das Gegenlager oder der zweite Tisch mit dem zweiten Flansch verbunden ist.

Das Gestell vorliegender Erfindung zeichnet sich durch die mechanisch entkoppelte Kombination und verschachtelte Anordnung verschiedener Last aufnehmender Konstruktionen für Fügevorrichtungen mit einer vertikalen Lasteinbringung aus. Um zunächst miteinander zu verbindende Bauteile oder Werkzeug und Bauteil in vertikaler Richtung aufeinanderzu bewegen zu können, ist der genannte Doppelrahmen vorgesehen. Dieser führt die Bauteile oder Werkzeuge oder Schwinggebilde oder dergleichen in vertikaler Richtung aufeinander zu. Dabei bilden die seitlich von den beiden Vertikalsäulen weg ragenden Kragarme, die vorzugsweise quer zu den Vertikalsäulen angeordnet sind, eine mechanische Stütze für die bewegten Bauteile, Werkzeuge und dergleichen. Denn diese beiden Kragarme, die parallel zueinander angeordnet sind und bewegt werden oder starr angeordnet sind und gemeinsam einen Tisch tragen, liefern aufgrund ihrer Konstruktion gerade in Kombination mit einer Grundplatte, einem Gegenlager oder einem weiteren bewegten Tisch die Gegenkraft für eine aufzubringende Schweißkraft.

Dabei zeichnet sich die Konstruktion des Doppelrahmens dadurch aus, dass er aufgrund seiner Stabilität und seiner mechanischen Entkoppelung von der Last erzeugenden Antriebseinheit nicht zu Verformungen während eines Schweißvorgangs neigt. Dies stellt sicher, dass er während des Schweißvorgangs die beiden miteinander zu verbindenden Bauteile oder die Anordnung von Schwinggebilde und Amboss oder die Anordnung von Werkzeug und Gegenlager in ihrer Orientierung zueinander sicher gehalten sind. Denn die Antriebseinheit ist nicht starr mit den relativ zueinander bewegten Komponenten, wie Tisch, Gegenlager, verbunden. Selbst wenn daher die Antriebseinheit aufgrund der Belastung ein Aufbiegemoment erfährt, überträgt sich das Aufbiegemoment nicht auf den Doppelrahmen.

Um aber den zumindest einen versetzbaren Tisch, der am Doppelrahmen geführt ist, zum Schweißen zu führen und die nötige Schweißkraft aufzubringen, ist die C-förmige Antriebseinheit zwischengeordnet im Doppelrahmen angeordnet. Diese C-förmige Antriebseinheit dient somit der Aufbringung der Schweißkraft über den versetzbaren Tisch auf die zwischen dem versetzbaren Tisch und dem Gegenlager angeordneten Bauteile oder/und Werkzeuge oder/und Schwinggebilde oder dergleichen. Während der Doppelrahmen für die definierte Orientierung des bewegten Tisches und/oder des Gegenlagers und/oder des Werkzeugs und/oder des Schwinggebildes und/oder der Bauteile und/oder eines weiteren bewegten Tisches sorgt, erzeugt die C-förmige Antriebseinheit die für das Schweißen erforderliche Kraft in vertikaler Richtung oder parallel zu den Vertikalsäulen. Sollte dabei eine eventuell aufgebrachte Schweißkraft dazu führen, dass die C-fönnige Antriebseinheit trotz ihrer Steifigkeit aufgebogen wird, dann ist dieses aufbiegende Moment auf die C-förmige Antriebseinheit beschränkt. Entsprechend wird trotz des Aufbiegens der C-fönnigen Antriebseinheit die Anordnung der miteinander zu verbindenden Bauteile oder die Anordnung von Werkzeug und Gegenlager oder von Schwinggebilde und Gegenlager usw. nicht beeinträchtigt. Selbst wenn die C-förmige Antriebseinheit bis an ihre Leistungsgrenze belastet wird und sich während einer Aufbringung einer Schweißkraft aufbiegt, führt dies nicht zu nachteiligen Auswirkungen auf die herzustellende Schweißverbindung.

Gemäß einer bevorzugten Ausführungsform des erfindungsgemäßen Gestells ist die Verbindung zwischen dem ersten Flansch und dem Tisch beweglich konstruiert. Gemäß einer weiteren bevorzugten Ausführungsform vorliegender Erfindung ist die Verbindung zwischen dem zweiten Flansch und dem weiteren Tisch oder dem Gegenlager beweglich ausgeführt. Beweglich bedeutet in diesem Zusammenhang, dass Verformungen und/oder Bewegungen der Antriebseinheit nicht auf den Doppelrahmen übertragen werden. Es handelt sich somit um eine mechanische Lasten übertragende Verbindung.

Aus obiger Konstruktion folgt, dass eine nicht-starre Verbindung zwischen dem von dem Vertikalschenkel der C-förmigen Antriebseinheit weg ragenden Flansch und dem mit dem Flansch verbundenen Tisch genutzt wird. Dies gilt in gleicher Weise für die mechanische Verbindung zwischen dem zweiten Flansch und einem Gegenlager und/oder einem weiteren bewegten Tisch und/oder einer anderen Verbindung zwischen dem zweiten Flansch und einer weiteren Konstruktionskomponente. Aufgrund dieser bevorzugt nicht-starren Verbindung zwischen dem jeweiligen Flansch und der durch diesen Flansch zu bewegenden oder zu stützenden Konstruktionskomponente ist gewährleistet, dass ein Aufbiegen der C-förmigen Antriebseinheit erfolgen kann. Dieses Aufbiegen beeinträchtigt aufgrund der nicht-starren Verbindung gerade nicht die mechanische Kopplung und somit die Krafteinleitung in den bewegten Tisch und das Gegenlager oder den weiteren bewegten Tisch des Doppelrahmens. Denn selbst wenn aufgrund der Aufbiegung der C-förmigen Antriebseinheit eine Krafteinleitung von dieser Antriebseinheit nicht senkrecht in den bewegten Tisch erfolgt, wird eine für ein Schweißen ausreichende Vertikalkomponente der Schweißkraft auf den bewegten Tisch bzw. das Werkzeug usw. übertragen. Aufgrund dieser Konstruktion ist gewährleistet, dass die C-förmige Antriebseinheit die notwendige Schweißkraft in vertikaler Richtung bereitstellt, ohne dabei jedoch eine Ausrichtung der miteinander zu verbindenden Bauteile oder der miteinander kooperierenden Maschinenkomponenten zu stören.

Gemäß einer weiteren bevorzugten Ausführungsform vorliegender Erfindung ist mit der C-förmigen Antriebseinheit der mindestens eine Tisch des Doppelrahmens aufbiegungsentkoppelt gegen den weiteren Tisch oder das Gegenlager derart bewegbar, dass ein Aufbiegen des Gestells, insbesondere des Doppelrahmens, aufgrund mechanischer Lasten in Richtung parallel zu den Vertikalsäulen auf die C-förmige Antriebseinheit beschränkt, vorzugsweise verhindert, ist.

Gemäß einer weiteren bevorzugten Ausführungsform vorliegender Erfindung tragen die Kragarme einen fest angeordneten zweiten Tisch, vorzugsweise eine Werkzeugaufnahme, gegen den der erste Tisch bewegbar ist.

Gemäß unterschiedlicher Anforderungen an die mithilfe des Gestells zu realisierenden Schweißvorrichtung werden bevorzugt unterschiedliche Bewegungskonzepte in dem Doppelrahmen realisiert. Gemäß einer Alternative sind bevorzugt die Kragarme in vertikaler Richtung benachbart zum oberen Ende der Vertikalsäulen fest angeordnet. An ihnen stützt sich ein bevorzugt quer zu den Vertikalsäulen verlaufender Tisch in fester Anordnung ab, sodass für einen Schweißvorgang ein Werkzeug oder ein bewegter Tisch gegen diesen fest angeordneten zweiten Tisch bewegt werden kann.

Da sowohl der fest angeordnete Tisch wie auch der bewegbare Tisch an den Vertikalsäulen des Doppelrahmens geführt sind, besitzen diese beiden aufeinanderzu bewegten Tische vorzugsweise eine parallele Ausrichtung zueinander.

Es ist ebenfalls bevorzugt, je nach Geometrie der miteinander zu verbindenden Bauteile oder entsprechend einer Geometrie von verwendetem Schwinggebilde und Gegenlager oder von verwendetem Werkzeug und Gegenwerkzeug oder Gegenlager eine nicht-parallele Ausrichtung der beiden aufeinanderzu bewegten Tische zu wählen. Insgesamt soll durch die gezielte Orientierung der aufeinanderzu bewegbaren Tische sichergestellt sein, dass diese eine optimale Anordnung und Ausrichtung der miteinander zu verbindenden Bauteile unterstützen. Zudem wird aufgrund der Anordnung dieser bewegbaren Tische in der mechanisch stabilen Konstruktion des Doppelrahmens gewährleistet, dass die Orientierung der miteinander zu verbindenden Bauteile trotz Aufbringung einer Schweißkraft und vorzugsweise konstant gewährleistet ist. Denn eine durch die mechanische Belastung der Schweißkraft möglicherweise erzeugte Aufbiegung wird durch die C-förmige Antriebseinheit allein aufgenommen, während der Doppelrahmen seine Form aufrechterhält.

Gemäß einer weiteren bevorzugten Ausführungsform des erfindungsgemäßen Gestells sind der erste Flansch über ein Kugelgelenk mit dem zweiten Tisch und der zweite Flansch über ein Kugelgelenk mit dem ersten Tisch verbunden, wobei vorzugsweise der erste und der zweite Flansch quer zum Vertikalschenkel angeordnet sind.

Gemäß der oben beschriebenen bevorzugten Ausführungsform des erfindungsgemäßen Gestells ist gewährleistet, dass trotz einer möglichen Aufbiegung der C-förmigen Antriebseinheit eine verlässliche Schweißkraft in die miteinander zu verbindenden Bauteile, die Tische oder Werkzeuge eingeleitet wird. Dabei ist wesentlich, dass die aufeinanderzu relativ bewegbaren Tische in ihrer Orientierung nicht durch die mögliche Aufbringung der C-förmigen Antriebseinheit beeinträchtigt werden. Entsprechend ist für die Verbindung zwischen dem ersten und dem zweiten Flansch der C-förmigen Antriebseinheit und dem angrenzend angeordneten Tisch oder Werkzeug oder anderen Komponenten der Schweißvorrichtung ein Kugelgelenk vorgesehen. Natürlich ist es analog ebenfalls bevorzugt, eine andere mechanische Kopplung zwischen dem Flansch und dem Tisch zu nutzen, die eine Entkopplung zwischen dem Tisch und einer möglichen Aufbiegung der C-förmigen Antriebseinheit sicherstellt. Die Entkoppelung entkoppelt eine Aufbiegungsbewegung der Antriebseinheit vom Doppelrahmen, insbesondere von relativ zueinander bewegten Komponenten des Doppelrahmens.

Gemäß einer weiteren bevorzugten Ausführungsform vorliegender Erfindung ist an dem mindestens einen bewegbaren Tisch des Doppelrahmens ein Kraftmesssensor vorgesehen. Analog dazu ist es ebenfalls bevorzugt, eine zu einem Kraftmesssensor alternative Vorrichtung mit Gestell anzuwenden, mit der ebenfalls verlässlich eine mechanische Belastung während eines Schweißvorgangs erfassbar ist.

Gemäß einer weiteren bevorzugten Ausführungsform des erfindungsgemäßen Gestells weisen der erste und der zweite Flansch der C-förmigen Antriebseinheit einen ersten und einen zweiten Schlitten auf, die auf einer Führung entlang des Vertikalschenkels gelagert und linear bewegbar geführt sind. Diese Schlitten übertragen die für Schweißvorgänge erforderliche Bewegung auf die relativ zueinander bewegbaren Teile des Doppelrahmens. Zudem übertragen diese Schlitten die erforderliche Schweißkraft auf die im Doppelrahmen angeordneten Bauteile oder Werkzeuge oder Schwinggebilde und Gegenwerkzeug usw. Es ist bevorzugt, dass auch die hier beschriebenen Schlitten nicht-starr mit den relativ zueinander bewegbaren Tischen oder ähnlichen Anordnungen des Doppelrahmens verbunden sind. Denn nur diese nicht-starre Verbindung gewährleistet, dass ein mögliches Aufbiegen der C-förmigen Antriebseinheit gerade nicht über die Schlitten auf die herzustellende Schweißverbindung übertragen wird.

Vorliegende Erfindung umfasst zudem eine Schweißvorrichtung in Kombination mit dem oben beschriebenen Gestell. Diese Schweißvorrichtung nutzt eine Laserschweißvorrichtung oder eine Infrarotschweißvorrichtung oder eine Vibrationsschweißvorrichtung oder eine Ultraschallschweißvorrichtung oder eine Rotationsreibschweißvorrichtung.

Des Weiteren umfasst vorliegende Erfindung die Verwendung des Gestells gemäß einer der oben beschriebenen bevorzugten Ausführungsformen zum Laserschweißen oder Infrarotschweißen oder Vibrationsschweißen oder Ultraschallschweißen oder Rotationsreibschweißen.

Vorliegende Erfindung umfasst zudem ein Schweißverfahren für eine der oben beschriebenen Schweißvorrichtungen. Dieses Schweißverfahren weist die folgenden Schritte auf: Anordnen mindestens eines ersten Bauteils auf dem ersten Tisch, relatives Bewegen des ersten Bauteils gegen ein Werkzeug oder ein zweites Bauteil, welches mit einem Gegenlager oder einem weiteren bewegbaren Tisch verbunden ist, wobei der erste und der zweite Flansch der C-förmigen Antriebseinheit aufeinanderzu bewegt werden, während des Schweißen Aufnehmen oder Aufbringen einer mechanischen Last von oder auf das erste Bauteil durch die C-förmige Antriebseinheit.

Da das erfindungsgemäße Schweißverfahren das oben beschriebene Gestell in Kombination mit einer Schweißvorrichtung verwendet, werden die für das Schweißen erforderlichen mechanischen Lasten über die C-förmige Antriebseinheit auf die Bauteile aufgebracht. Da bereits die oben beschriebene mechanische Entkopplung zwischen der C-förmigen Antriebseinheit und dem Doppelrahmen konstruktiv realisiert ist, ist auch das Schweißverfahren dadurch ausgezeichnet, dass sich ein aufbiegendes Moment auf die C-förmige Antriebseinheit beschränkt. Entsprechend wird der Doppelrahmen nicht durch ein Biegemoment belastet.

Gemäß einer weiteren bevorzugten Ausführungsform des erfindungsgemäßen Schweißverfahrens findet der folgende Schritt statt: Erfassen mechanischer Lasten am Bauteil mithilfe mindestens eines Kraftmesssensors in Kombination mit dem ersten Tisch oder mithilfe von Dehnmessstreifen an der C-förmigen Antriebseinheit.

Zudem ist es erfindungsgemäß bevorzugt, das Schweißverfahren mit dem folgenden zusätzlichen Schritt durchzuführen: Einleiten einer mechanischen Last der C-förmigen Antriebseinheit über nicht-starre Verbindungen in den ersten Tisch und/oder das Gegenlager oder den zweiten Tisch, sodass trotz der Aufbiegung der C-förmigen Antriebseinheit das Verschweißen nicht beeinträchtigt ist.

### 4. Kurze Beschreibung der begleitenden Zeichnungen

Die vorliegende Erfindung wurde unter Bezugnahme auf die begleitenden Zeichnungen näher erläutert. Es zeigen:
- Figur 1: eine perspektivische schematische Darstellung einer bevorzugten Ausführungsform des erfindungsgemäßen Gestells vorliegender Erfindung,

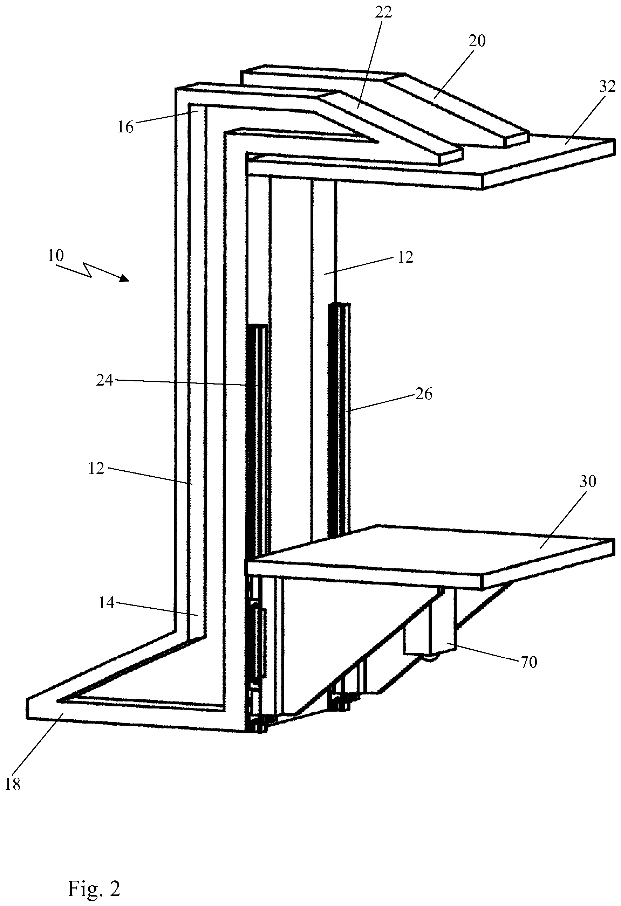

- Figur 2: eine bevorzugte Ausführungsform des Doppelrahmens des erfindungsgemäßen Gestells in einer perspektivischen Darstellung,

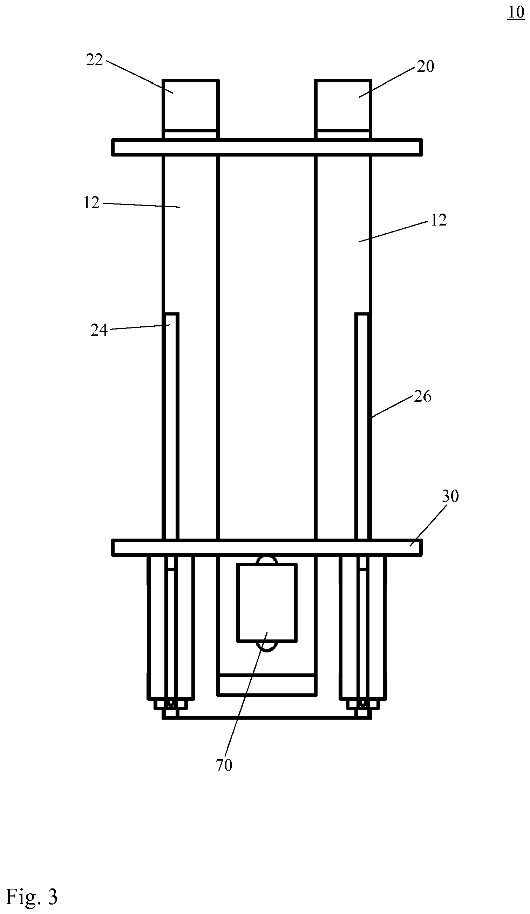

- Figur 3: eine Darstellung des Doppelrahmens aus Figur 2 in einer Draufsicht,
- Figur 4: eine Seitenansicht einer bevorzugten Ausführungsform der Antriebseinheit des erfindungsgemäßen Gestells vorliegender Erfindung,
- Figur 5: eine Draufsicht auf die Antriebseinheit gemäß Figur 4,
- Figur 6: eine perspektivische Ansicht der Antriebseinheit aus Figur 4 und

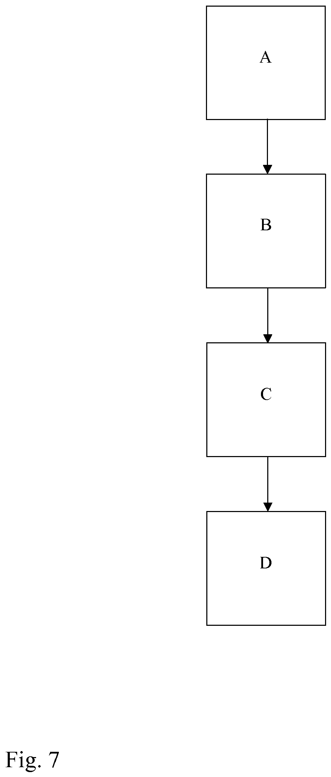

- Figur 7: ein Flussdiagramm einer bevorzugten Ausführungsform des Schweißverfahrens gemäß vorliegender Erfindung.

### 5. Detaillierte Beschreibung der bevorzugten Ausführungsformen

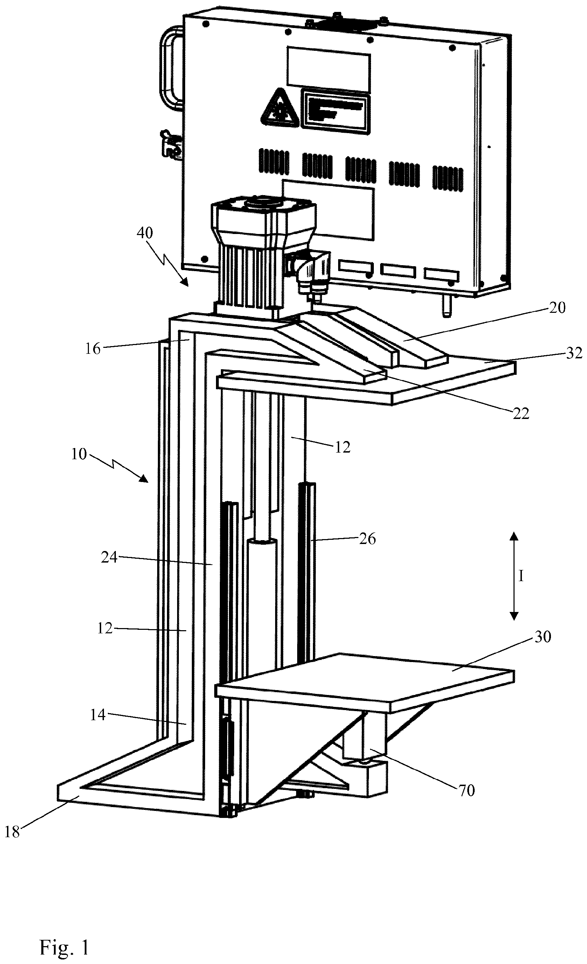

Figur 1 zeigt eine bevorzugte Ausführungsfonn eines Gestells 1 einer Schweißvorrichtung. Das bevorzugte Gestell 1 wird gemäß unterschiedlicher bevorzugter Ausführungsformen vorliegender Erfindung in Kombination mit einer Laserschweißvorrichtung oder einer Infrarotschweißvorrichtung oder einer Vibrationsschweißvorrichtung oder einer Ultraschallschweißvorrichtung oder einer Reibschweißvorrichtung verwendet.

Die bevorzugte Ausführungsform des Gestells 1 in Figur 1 ist ohne Schweißvorrichtung gezeigt, um die konstruktiven Eigenschaften des Gestells 1 besser veranschaulichen zu können.

Das bevorzugte Gestell 1 umfasst einen Doppelrahmen 10, der zwei parallel zueinander und nebeneinander angeordnete Vertikalsäulen 12 aufweist. Die Vertikalsäulen 12 sind mit einem seitlichen Abstand zueinander fest an einer Basis 18, hier eine Platte, befestigt. Die Basis 18 gewährleistet eine stabile und positionsgetreue Anordnung der Vertikalsäulen 12. Während das untere Ende der Vertikalsäulen 12, hier das erste Ende 14, in der Basis 18 verankert ist, sind benachbart zu einem zweiten Ende 16 der Vertikalsäulen 12, hier das obere Ende der Vertikalsäulen 12, jeweils ein Kragarm 20, 22 an jeder Vertikalsäule 12 angeordnet. Die Kragarme 20, 22 sind vorzugsweise integral mit den Vertikalsäulen 12 ausgebildet oder fest mit diesen verbunden.

Gemäß einer bevorzugten Ausführungsform vorliegender Erfindung sind an den Vertikalsäulen 12 parallele Führungen 24, 26 vorgesehen. Sie dienen der Führung eines bewegbaren Tisches 30 oder einer anderen Komponente des Gestells 1 oder der Schweißvorrichtung. Da die Führungen 24, 26 an den Vertikalsäulen 12 befestigt sind und parallel zu den Vertikalsäulen verlaufen, dienen sie der Bewegung eines ersten Tisches 30 in Richtung der fest angeordneten Kragarme 20, 22.

Die bevorzugte Ausführungsform der Figur 1 zeigt den Doppelrahmen 10 als S-förmige Kombination aus Kragarm 20, 22, Vertikalsäule 12 und Basis 18. Es ist ebenfalls bevorzugt, den Doppelrahmen 10 C-förmig zu realisieren. Zu diesem Zweck erstreckt sich vorzugsweise die Basis 18 bis zu einer parallelen und benachbarten bzw. gegenüberliegenden Anordnung zu den Kragarmen 20, 22.

Gemäß einer bevorzugten Ausführungsform vorliegender Erfindung ist an den Kragarmen 20, 22 ein zweiter Tisch 32 fest angeordnet. Die Tische 30, 32 veranschaulichen die Anordnungsmöglichkeit von Werkzeugen oder Bearbeitungskomponenten der oben genannten Schweißvorrichtungen. Derartige Werkzeuge und Bearbeitungskomponenten sowie deren Anordnung und Verwendung sind im Stand der Technik allgemein bekannt.

Vorzugsweise ist in einer Ultraschallschweißvorrichtung ein Schwinggebilde mit Sonotrode am Tisch 32 befestigt. Zwei miteinander zu verbindende Bauteile, beispielsweise zwei Stoffbahnen, laufen bevorzugt über den bewegbaren Tisch 30, der somit auch eine Walze oder ein Gegenwerkzeug darstellen kann. Zum Herstellen einer Schweißverbindung zwischen den Stoffbahnen ist der bewegbare Tisch 30 mit dem Gegenwerkzeug und dem Material in Richtung Kragarme 20, 22 und erster Tisch 32 verfahrbar. Bei dieser Bewegung trifft die Sonotrode (nicht gezeigt) auf die Materialbahnen des Tisches 32 bzw. der Walze und verschweißt es miteinander.

In einer bevorzugten analogen Anordnung einer Vibrationsschweißmaschine ist vorzugsweise am Tisch 32 anstelle der Sonotrode ein Schwingkopf vorgesehen.

In einer weiteren bevorzugten Anordnung einer Infrarotschweißvorrichtung oder einer Laserschweißvorrichtung ist bevorzugt am Tisch 32 anstelle der Sonotrode eine Laserquelle oder eine Infrarotquelle vorgesehen. Der Tisch 30 trägt entsprechend das Gegenwerkzeug in dieser Infrarotschweißvorrichtung oder der Laserschweißvorrichtung.

In gleicher Weise ist es bevorzugt, den Tisch 32 mit einem Reibschweißantrieb auszustatten, um eine Reibschweißverbindung herzustellen. Der verfahrbare Tisch 30 bildet in diesem Fall den Amboss oder das Gegenwerkzeug, auf dem ein zu verbindendes Bauteil angeordnet ist.

Während die obigen Anordnungen Beispiele darstellen, ist es in gleicher Weise möglich, die Anordnung an den Tischen 30, 32 zu tauschen. Denn die beiden Tische 30, 32 führen eine Relativbewegung in Verlaufsrichtung der Vertikalsäule 12 durch, die zu einer Schweißverbindung oder zu einem Lösen der Werkzeuge nach einem Schweißen führt.

Gemäß der bevorzugten Ausführungsform der Figur 1 bewegt sich der Tisch 30 in Richtung des Pfeils 1. Der Tisch 32 ist fest am Kragarm 20, 22 befestigt.

Es ist ebenfalls bevorzugt, dass der Tisch 32 bewegbar angeordnet ist, während der Tisch 30 fest positioniert ist. Zu diesem Zweck ist der Tisch 32 bevorzugt über Schienen (nicht gezeigt) parallel zu den Vertikalsäulen 12 und an den Vertikalsäulen 12 geführt.

Gemäß einer weiteren bevorzugten Ausführungsform vorliegender Erfindung sind beide Tische 30, 32 bewegbar an den Vertikalsäulen 12 angeordnet. Zu diesem Zweck sind Führungen 24, 26 für beide Tische 30, 32 vorgesehen, sodass sie parallel zu den Vertikalsäulen 12 versetzbar sind.

Die Vertikalsäulen 12 in Kombination mit der Basis 18 und den Kragarmen 20, 22 realisieren eine konstante Orientierung der Tische 30, 32 mit Bezug zueinander. Gleichzeitig dazu stellt die Konstruktion des Doppelrahmens 10 sicher, dass die Vertikalsäulen 12 nicht aufgebogen und damit die Orientierung der Tische 30, 32 zueinander gestört wird.

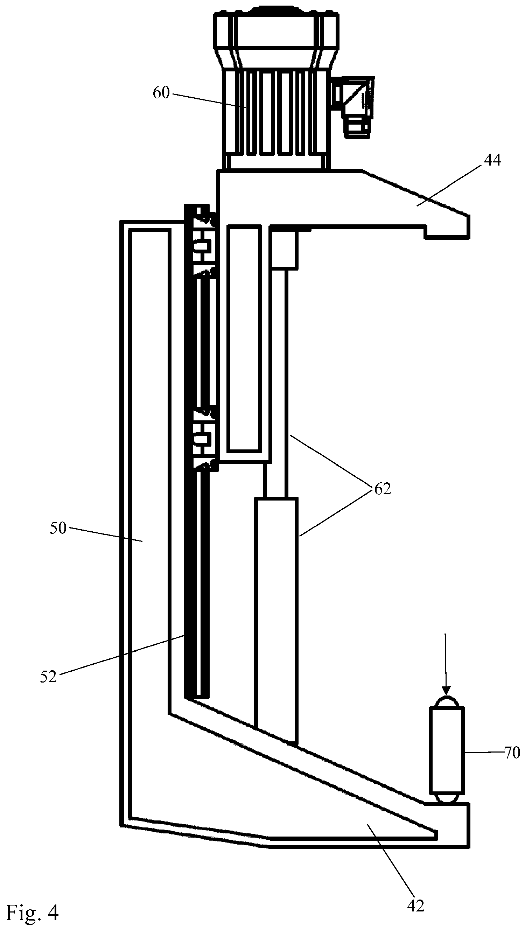

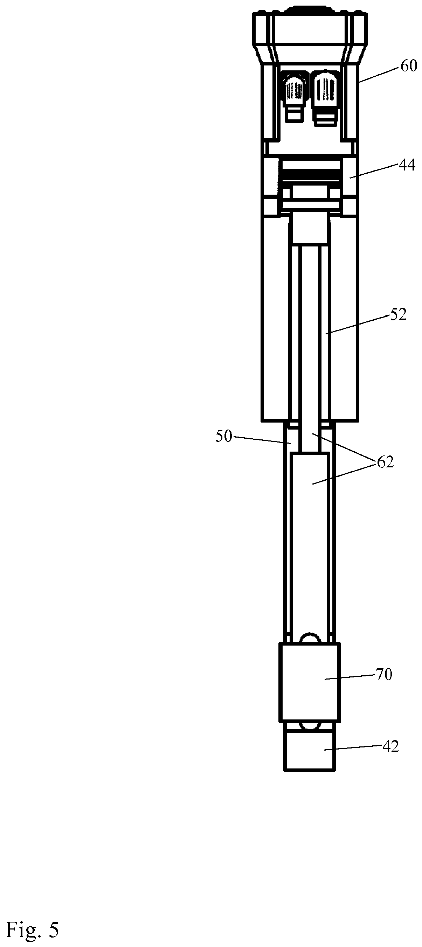

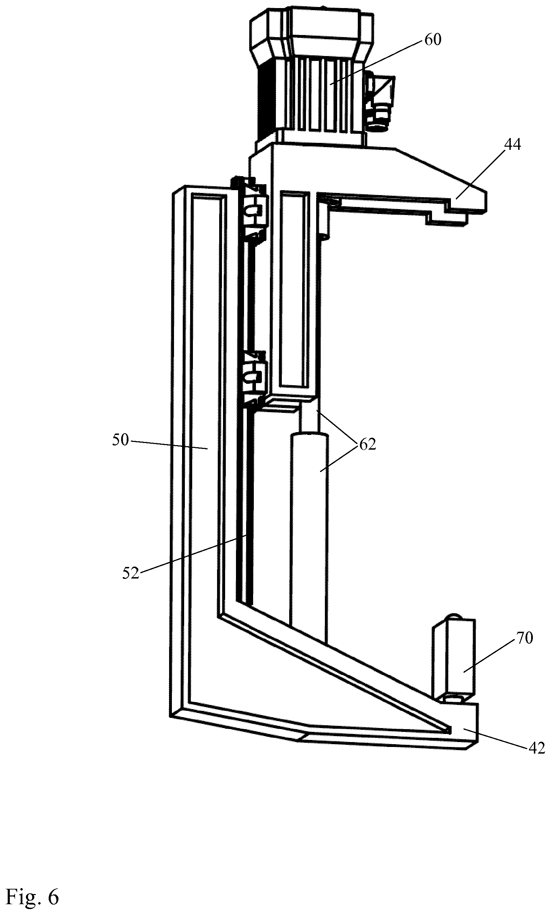

Zur bevorzugten Bewegung eines Tisches 30 oder beider Tische 30, 32 parallel zu den Vertikalsäulen 12 ist eine C-förmige Antriebseinheit 40 vorgesehen (siehe Figur 1 und Figuren 4-6).

Die Antriebseinheit 40 umfasst einen ersten 42 und einen zweiten Flansch 44, die über einen Vertikalschenkel 50 miteinander verbunden sind. Vorzugsweise sind der erste 42 und der zweite Flansch 44 quer zum Vertikalschenkel 50 und parallel zueinander angeordnet. Zudem sind am Vertikalschenkel 50 Führungen 52 vorgesehen, sodass zumindest der erste Flansch 42 nach Art eines Schlittens relativ zum zweiten Schenkel 44 und parallel zum Vertikalschenkel 50 bewegbar ist.

Es ist ebenfalls bevorzugt, beide Flansche 42, 44 jeweils als Schlitten anzuordnen, um sie relativ zueinander zu bewegen.

Zur Bewegung mindestens eines Flansches 42, 44 relativ zum anderen Flansch 44, 42 weist die Antriebseinheit 40 einen Linearantrieb 60, 62 auf. Der Linearantrieb 60, 62 kann alle gängigen Linearantriebe umfassen. Dazu zählt bevorzugt ein Spindeltrieb, bei dem ein Flansch 42 mit der Spindel und der andere Flansch 44 mit der Mutter verbunden ist. In einer anderen bevorzugten Ausgestaltung des Linearantriebs 60, 62 ist dieser als ein hydraulischer oder pneumatischer Kolben-Zylinder-Antrieb realisiert. Zudem ist auch ein elektromagnetischer Antrieb als Linearantrieb 60, 62 einsetzbar.

Wie man anhand der bevorzugten Ausführungsform in Figur 1 erkennen kann, ist die Antriebseinheit 40 zwischen den und parallel zu den Vertikalsäulen 12 des Doppelrahmens 10 angeordnet. In dieser Anordnung ist der erste Flansch 42 benachbart zum Tisch 30 positioniert. Der zweite Flansch 44 ist benachbart zum Tisch 32 angeordnet. Vorzugsweise sind der jeweilige Flansch 42, 44 und der dazu benachbarte Tisch 30, 32 nicht-starr miteinander verbunden.

Eine bevorzugte Konstruktion zur Herstellung dieser nicht-starren Verbindung sind Kugelgelenke zwischen Flansch 42, 44 und Tisch 30, 32.

Verkürzt sich der Linearantrieb 60, 62 in Zustellrichtung 1, werden die Flansche 42, 44 relativ aufeinanderzu bewegt. Entsprechend wird der bewegbare Tisch 30 in Richtung des fest angeordneten Tisches 32 versetzt, um einen Schweißvorgang durchzuführen.

Unabhängig davon, ob nur ein Flansch 42 oder beide Flansche 42, 44 über den Linearantrieb 60, 62 versetzbar angeordnet sind, wird der Tisch 30 in Richtung der Kragarme 20, 22 versetzt.

Wie sich aus obiger Beschreibung ergibt, sind der Doppelrahmen 10 und die Antriebseinheit 40 derart mechanisch miteinander kombiniert, dass sie aufbiegungsentkoppelt sind. Das bedeutet, dass die Antriebseinheit 40 mechanische Kräfte auf die Tische 30, 32 zu deren Relativbewegung aufbringt, die zu einem möglichen Aufbiegen der Antriebseinheit 40 führen können. Gleichzeitig stellt die Führung der Tische 30, 32 und die Stabilität des Doppelrahmens 10 mit den Vertikalsäulen 12 sicher, dass das Aufbiegemoment der Antriebseinheit 40 nicht auf den Doppelrahmen 10 übertragbar ist. Entsprechend sind der Doppelrahmen 10 und die Antriebseinheit 40 aufbiegungsentkoppelt zueinander angeordnet.

Wie oben bereits erwähnt worden ist, sind die beiden Flansche 42, 44 mit den Tischen 30, 32 nicht-starr, vorzugsweise über ein Kugelgelenk, verbunden. Dabei ist in gleicher Weise bevorzugt, nur einen der Tische 30, 32 oder beide Tische 30, 32 entlang der Vertikalsäulen 12 bewegbar anzuordnen. Um basierend auf dieser Konstruktion eine ausreichende Schweißkraft auf die Bauteile und Werkzeuge aufzubringen, ist es ausreichend, wenn die durch den Linearantrieb 60,62 erzeugte Kraft über die Flansche 42, 44 nicht zentral in die Tische 30, 32 eingeleitet wird. Denn durch die Konstruktion des Gestells 1 bleibt trotz nicht dezentraler Krafteinleitung die parallele Orientierung der Teller 30, 32 zueinander erhalten. Das bedeutet, es findet keine Übertragung einer möglichen Aufbiegung der Antriebseinheit 40 auf den Doppelrahmen 10 statt.

Zur Erfassung einer Schweißkraft wird der bewegte Tisch 30 im Doppelrahmen 10 mit einem bekannten Kraftmesssensor 70 ausgestattet. Die Daten des Kraftmesssensors 70 werden an einen Industriecomputer (nicht gezeigt) als Steuereinheit weitergeleitet. Dieser übernimmt auch eine Steuerung oder Regelung von Schweißprozessen, die mithilfe des Gestells 1 realisiert werden.

Anhand einer Ultraschallschweißvorrichtung in Kombination mit dem bevorzugten Gestell 1 wird das Schweißverfahren vorliegender Erfindung anhand einer bevorzugten Ausführungsform beispielgebend für die anderen oben genannten bekannten Schweißvorrichtungen beschrieben. Dazu wird davon ausgegangen, dass am fest angeordneten Tisch 32 ein Schwinggebilde mit Sonotrode befestigt ist. Der Tisch 30 bewegt ein Gegenwerkzeug, beispielsweise einen Amboss oder eine Walze, in Richtung Sonotrode, um Material zwischen Sonotrode und Gegenwerkzeug miteinander zu verschweißen.

Entsprechend wird in einem ersten Schritt A eine Materialbahn oder ein erstes Bauteil auf dem ersten Tisch 30 angeordnet. In einem zweiten Schritt B erfolgt dann das relative Bewegen des ersten Bauteils gegen ein Werkzeug, hier die Sonotrode. Es ist in gleicher Weise bevorzugt, dass das erste Bauteil gegen ein weiteres Bauteil bewegt wird, um diese mittels Ultraschall oder einer anderen Energiezufuhr miteinander zu verbinden. Im Zusammenhang mit der Relativbewegung im Schritt B des ersten Bauteils zur Sonotrode ist es in gleicher Weise bevorzugt, dass beide Tische 30, 32 bewegt werden. Dies ist ohne weiteres mit der oben beschriebenen Antriebseinheit 40 realisierbar.

Im darauffolgenden Schritt C erfolgt durch ein weiteres Verkürzen der Antriebseinheit 40 das Aufbringen einer mechanischen Last auf das zu verschweißende Bauteil. Da das Bauteil bzw. die Bauteile zwischen Sonotrode und Gegenwerkzeug in Kombination mit den Tischen 32 und 30 gegeneinander gedrückt werden, werden Ultraschallschwingungen in die miteinander zu verbindenden Materialien/Bauteile eingeprägt. Während dieses Schweißvorgangs wird im Schritt D die mechanische Belastung während des Schweißens mithilfe des oben angesprochenen Kraftmesssensors 70 erfasst. In diesem Zusammenhang ist es ebenfalls bevorzugt, anstelle des Kraftmesssensors 70 alternative Messmöglichkeiten, wie beispielsweise Dehnmessstreifen oder dergleichen, einzusetzen.

Nachdem die Schweißverbindung hergestellt worden ist, wird über die Antriebseinheit 40 ein Entfernen der Sonotrode und des Bauteils bzw. Gegenwerkzeugs voneinander angesteuert. Entsprechend entfernen sich auch die beiden Tische 30, 32 relativ voneinander.

Sobald dies erfolgt ist, wird das verschweißte Bauteil bzw. Werkstück der Schweißvorrichtung entnommen.

### 6. Bezugszeichenliste

- 1: Gestell
- 10: Doppelrahmen
- 12: Vertikalsäule
- 14: erstes Ende
- 16: zweites Ende
- 18: Basis
- 20, 22: Kragarme
- 44,26: Führungen
- 30: bewegbarer Tisch
- 32: Tisch
- 40: Antriebseinheit
- 42, 44: Flansch
- 50: Vertikalschenkel
- 52: Führungen
- 60, 62: Linearantrieb
- 70: Kraftmesssensor

## Patentansprüche

1. Gestell (1) für eine Schweißvorrichtung, insbesondere eine Laserschweißvorrichtung oder eine Infrarotschweißvorrichtung oder eine Vibrationsschweißvorrichtung oder eine Ultraschallschweißvorrichtung, welches die folgenden Merkmale aufweist:
a. einen Doppelrahmen (10), der mindestens zwei auf einer Grundplatte (18) befestigte sowie parallel zueinander und nebeneinander angeordnete Vertikalsäulen (12) und jeweils einen an den Vertikalsäulen (12) befestigten Kragarm (20, 22) aufweist,
b. mindestens einen parallel zu den Vertikalsäulen (12) versetzbaren Tisch (30), der parallel an den beiden Vertikalsäulen (12) geführt ist,
c. eine C-förmige Antriebseinheit (40), die einen ersten (42) und einen zweiten Flansch (44) umfasst, die relativ zueinander linear bewegbar an einem verbindenden Vertikalschenkel (50) geführt sind, in der mit der Antriebseinheit (40) ein Abstand zwischen dem ersten (42) und dem zweiten Flansch (44) in Richtung des Vertikalschenkels (50) veränderbar ist, wobei
d. die C-förmige Antriebseinheit (40) zwischen den Vertikalsäulen (12) des Doppelrahmens (10) angeordnet ist und
e. über eine Verbindung zwischen dem ersten Flansch (42) und dem Tisch (30) des Doppelrahmens (10) der Tisch (30) relativ gegen ein starres Gegenlager (32) oder gegen einen weiteren bewegbaren Tisch des Doppelrahmens (10) bewegbar ist, wobei das Gegenlager (32) oder der zweite Tisch mit dem zweiten Flansch (44) verbunden ist.

2. Gestell (1) nach Patentanspruch 1, in welchem die Verbindung zwischen dem ersten Flansch (42) und dem Tisch (30) beweglich ist.

3. Gestell (1) nach Patentanspruch 2, in welchem die Verbindung zwischen dem zweiten Flansch (44) und dem weiteren Tisch (32) oder dem Gegenlager beweglich ist.

4. Gestell (1) gemäß einem der vorhergehenden Patentansprüche, in welchem mit der C-förmigen Antriebseinheit (40) der mindestens eine Tisch (30) des Doppelrahmens (10) aufbiegungsentkoppelt gegen den weiteren Tisch (32) oder das Gegenlager derart bewegbar ist, dass ein Aufbiegen des Gestells (1) aufgrund mechanischer Lasten in Richtung parallel zu den Vertikalsäulen (12) auf die C-förmige Antriebseinheit (40) beschränkt ist.

5. Gestell (1) gemäß einem der vorhergehenden Patentansprüche, in welchem die Kragarme (20, 22) einen fest angeordneten zweiten Tisch (32), vorzugsweise eine Werkzeugaufnahme, tragen, gegen den der erste Tisch (30) relativ bewegbar ist.

6. Gestell (1) gemäß Patentanspruch 5, in welchem der erste Flansch (42) über ein Kugelgelenk mit dem ersten Tisch (30) und der zweite Flansch (44) über ein Kugelgelenk mit dem zweiten Tisch (32) verbunden ist, wobei vorzugsweise der erste (42) und zweite Flansch (44) quer zum Vertikalschenkel (50) angeordnet sind.

7. Gestell (1) gemäß einem der vorhergehenden Patentansprüche, in welchem an dem mindestens einen bewegbaren Tisch (30) des Doppelrahmens (10) ein Kraftmesssensor angeordnet ist.

8. Gestell (1) gemäß einem der vorhergehenden Patentansprüche, in welchem der erste (42) und der zweite Flansch (44) der C-förmigen Antriebseinheit (40) aus einem ersten und einem zweiten Schlitten bestehen, die auf einer Führung (52) entlang des Vertikalschenkels (50) gelagert und linear bewegbar geführt sind.

9. Schweißvorrichtung in Kombination mit dem Gestell (1) gemäß einem der Patentansprüche 1 bis 8, die umfassen:
eine Laserschweißvorrichtung oder
eine Infrarotschweißvorrichtung oder
eine Vibrationsschweißvorrichtung oder
eine Ultraschallschweißvorrichtung.

10. Verwendung des Gestells (1) gemäß einem der vorhergehenden Patentansprüche 1-8 zum Laserschweißen, Infrarotschweißen, Vibrationsschweißen oder Ultraschallschweißen.

11. Schweißverfahren mit einer Schweißvorrichtung gemäß dem unabhängigen Patentanspruch 9, welches die folgenden Schritte aufweist:
a. Anordnen (Schritt A) mindestens eines ersten Bauteils auf dem ersten Tisch (30),
b. relatives Bewegen (B) des ersten Bauteils gegen ein Werkzeug oder ein zweites Bauteil, welches mit einem Gegenlager oder einem weiteren bewegbaren Tisch (32) verbunden ist, wobei der erste (42) und der zweite Flansch (44) der C-förmigen Antriebseinheit (40) aufeinander zubewegt werden,
c. während des Schweißens Aufbringen (C) einer mechanischen Last auf das erste Bauteil durch die C-förmige Antriebseinheit (40).

12. Schweißverfahren gemäß Patentanspruch 11 mit dem weiteren Schritt:
Erfassen (D) mechanischer Lasten am Bauteil mithilfe mindestens eines Kraftmesssensors in Kombination mit dem ersten Tisch (30) oder mithilfe von Dehnmessstreifen an der C-förmigen Antriebseinheit (40).

13. Schweißverfahren gemäß Patentanspruch 11 oder 12, mit dem weiteren Schritt:
Einleiten einer mechanischen Last der C-förmigen Antriebseinheit (40) über nicht-starre Verbindungen in den ersten Tisch (30) und/oder das Gegenlager oder den zweiten Tisch (32), sodass trotz Aufbiegung der C-förmigen Antriebseinheit (40) das Verschweißen nicht beeinträchtigt ist.

## Claims

1. Rack (1) for a welding device, in particular a laser welding device or an infrared welding device or a vibration welding device or an ultrasonic welding device, comprising the following features:
a. a double frame (10) having at least two vertical columns (12) being fastened on a base plate (18) as well as extending parallel to each other and being arranged next to each other, and each having a cantilever (20, 22) being fastened to the vertical columns (12),
b. at least one table (30) that is displaceable parallel to the vertical columns (12) and guided parallel at the two vertical columns (12),
c. a C-shaped drive unit (40), comprising a first (42) and a second flange (44) being linearly movable relative to each other at a connecting vertical leg (50), wherein a distance between the first (42) and the second flange (44) is changeable with the drive unit (40) in the direction of the vertical leg (50), wherein
d. the C-shaped drive unit (40) is arranged between the vertical column (12) of the double frame (10) and
e. the table (30) is movable by means of a connection between the first flange (42) and the table (30) of the double frame (10) relative against a rigid counter bearing (32) or against a further moveable table of the double frame (10), wherein the counter bearing (32) or the second table is connected with the second flange (44).

2. Rack (1) according to claim 1, in which the connection between the first flange (42) and the table (30) is movable.

3. Rack (1) according to claim 2, in which the connection between the second flange (44) and the further table (32) or the counter bearing is movable.

4. Rack (1) according to one of the preceding claims, in which with the C-shaped drive unit (40), the at least one table (30) of the double frame (10) is movable in a decoupled manner with respect to bending up against the further table (32) or the counter bearing so that a bending up of the rack (1) due to mechanical loads in the direction parallel to the vertical columns (12) is limited to the C-shaped drive unit (40).

5. Rack (1) according to one of the preceding claims, in which the cantilevers (20, 22) carry a firmly arranged second table (32), preferably a tool holder, to which the first table (30) is movable relative.

6. Rack (1) according to claim 5, in which the first flange (42) is connected with the first table (30) by means of a ball joint and the second flange (44) is connected with the second table (32) by means of a ball joint, wherein preferably, the first (42) and the second flange (44) are arranged transversely to the vertical leg (50).

7. Rack (1) according to one of the preceding claims, in which a force measuring sensor is arranged at the at least one movable table (30) of the double frame (10).

8. Rack (1) according to one of the preceding claims, in which the first (42) and the second flange (44) of the C-shaped drive unit (40) are made of a first and a second carriage, which are supported and linearly movably guided on a guideway (52) along the vertical leg (50).

9. Welding device in combination with the rack (1) according to one of the claims 1 to 8, which comprise:
a laser welding device or
an infrared welding device or
a vibration welding device or
an ultrasonic welding device.

10. Use of the rack (1) according to one of the preceding claims 1-8 for laser welding, infrared welding, vibration welding or ultrasonic welding.

11. Welding method with a welding device according to the independent claim 9, comprising the following steps:
a. arranging (step A) at least one first component on the first table (30),
b. relative moving (B) of the first component against a tool or a second component which is connected with a counter bearing or a further movable table (32), wherein the first (42) and the second flange (44) of the C-shaped drive unit (40) are moved towards each other,
c. during the welding, applying (C) a mechanical load to the first component by means of the C-shaped drive unit (40).

12. Welding method according to claim 11, with the further step:
detecting (D) mechanical loads at the component with the help of at least one force measuring sensor in combination with the first table (30) or with the help of strain gauges at the C-shaped drive unit (40).

13. Welding method according to claim 11 or 12, with the further step:
transmitting a mechanical load of the C-shaped drive unit (40) via non-rigid connections into the first table (30) and/or the counter bearing or the second table (32), so that despite bending up the C-shaped drive unit (40), the welding is not affected.

## Revendications

1. Support (1) pour un dispositif de soudage, en particulier un dispositif de soudage au laser ou un dispositif de soudage infrarouge ou un dispositif de soudage par vibration ou un dispositif de soudage à ultrasons, présentant les caractéristiques suivantes :
a. un double cadre (10), lequel présente au moins deux colonnes verticales (12) fixées à une plaque de base (18) et disposées côte à côte et parallèlement les unes aux autres, et respectivement un bras en porte-à-faux (20, 22) fixé aux colonnes verticales (12),
b. au moins une table (30) déplaçable parallèlement aux colonnes verticales (12), laquelle est guidée parallèlement sur les deux colonnes verticales (12),
c. une unité d'entraînement en forme de C (40) comportant une première (42) et une deuxième bride (44), lesquelles sont guidées sur une branche verticale de liaison (50) de façon à pouvoir se déplacer linéairement l'une par rapport à l'autre, l'unité d'entraînement (40) permettant de modifier une distance entre la première (42) et le deuxième bride (44) en direction de la branche verticale (50), dans lequel
d. l'unité d'entraînement en forme de C (40) est disposée entre les colonnes verticales (12) du double cadre (10) et
e. la table (30) est déplaçable par rapport à une butée fixe (32) ou à une autre table déplaçable du double cadre (10) par le biais d'une liaison entre la première bride (42) et la table (30) du double cadre (10), la butée (32) ou la deuxième table étant reliée à la deuxième bride (44).

2. Support (1) selon la revendication 1, dans lequel la liaison entre la première bride (42) et la table (30) est mobile.

3. Support (1) selon la revendication 2, dans lequel la liaison entre la deuxième bride (44) et l'autre table (32) ou la butée est mobile.

4. Support (1) selon l'une des revendications précédentes, dans lequel l'unité d'entraînement en forme de C (40) permet de déplacer l'au moins une table (30) du double cadre (10) vers l'autre table (32) ou vers la butée de manière désaccouplée en fléchissement, de façon à limiter un fléchissement du support (1) du fait de charges mécaniques orientées parallèlement aux colonnes verticales (12) sur l'unité d'entraînement en forme de C (40).

5. Support (1) selon l'une des revendications précédentes, dans lequel les bras en porte-à-faux (20, 22) portent une deuxième table (32) disposée fixement, de préférence un logement d'outil, par rapport à laquelle/auquel la première table (30) est déplaçable.

6. Support (1) selon la revendication 5, dans lequel la première bride (42) est reliée à la première table (30) par le biais d'un joint à rotule et la deuxième bride (44) est reliée à la deuxième table (32) par le biais d'un joint à rotule, dans lequel la première (42) et la deuxième bride (44) sont de préférence disposées perpendiculairement à la branche verticale (50).

7. Support (1) selon l'une des revendications précédentes, dans lequel un capteur de mesure de force est disposé sur l'au moins une table déplaçable (30) du double cadre (10).

8. Support (1) selon l'une des revendications précédentes, dans lequel la première (42) et la deuxième bride (44) de l'unité d'entraînement en forme de C (40) consistent en un premier et un deuxième chariot, lesquels sont montés sur un guide (52) le long de la branche verticale (50) et guidées de manière à pouvoir se déplacer linéairement.

9. Dispositif de soudage en combinaison avec le support (1) selon l'une des revendications 1 à 8, comportant :
un dispositif de soudage au laser ou
un dispositif de soudage infrarouge ou
un dispositif de soudage par vibration ou
un dispositif de soudage par ultrasons.

10. Utilisation du support (1) selon l'une des revendications précédentes 1 à 8, pour un soudage au laser, un soudage infrarouge, un soudage par vibration ou un soudage par ultrasons.

11. Procédé de soudage avec un dispositif de soudage selon la revendication indépendante 9, présentant les étapes suivantes :
a. agencement (étape A) d'au moins une première pièce sur la première table (30),
b. déplacement relatif (B) de la première pièce vers un outil ou vers une deuxième pièce, lequel/laquelle est relié(e) à une butée ou à une autre table déplaçable (32), dans lequel la première bride (42) et la deuxième bride (44) de l'unité d'entraînement en forme de C (40) sont déplacées l'une vers l'autre,
c. pendant le soudage, application (C) d'une charge mécanique sur la première pièce par l'unité d'entraînement en forme de C (40).

12. Procédé de soudage selon la revendication 11, comprenant l'étape supplémentaire suivante :
détection (D) de charges mécaniques sur la pièce à l'aide d'au moins un capteur de mesure de force en combinaison avec la première table (30) ou à l'aide de jauges de contrainte sur l'unité d'entraînement en forme de C (40).

13. Procédé de soudage selon la revendication 11 ou 12, comprenant l'étape supplémentaire suivante :
introduction d'une charge mécanique de l'unité d'entraînement en forme de C (40) par le biais de liaisons non fixes dans la première table (30) et/ou la butée ou la deuxième table (32), de telle façon que le soudage n'est pas affecté malgré un fléchissement de l'unité d'entraînement en forme de C (40).
